# EUROPÄISCHE PATENTSCHRIFT

(11) **EP 3 255 646 B1**
(45) Veröffentlichungstag und Bekanntmachung des Hinweises auf die Patenterteilung: **10.07.2019**
(21) Anmeldenummer: 17305605.2
(22) Anmeldetag: 23.05.2017
(51) Int. Cl.: H01H 31/00, H02B 11/28, H01H 33/666, H01H 31/10, H01H 33/52, H02B 13/02

(54) **SCHALTFELD**
SWITCHBOARD
TABLEAU DE COMMANDE

(30) Priorität: 06.06.2016 DE 102016110441
(43) Veröffentlichungstag der Anmeldung: 13.12.2017
(73) Patentinhaber: Schneider Electric Industries SAS, 92500 Rueil-Malmaison (FR)
(72) Erfinder: MUHAMMAD, Dardi Hanuri, 93055 Regensburg (DE)
(74) Vertreter: Manitz Finsterwald Patent- und Rechtsanwaltspartnerschaft mbB

(56) Entgegenhaltungen:
- WO-A1-2014/106912
- GB-A- 2 121 606
- JP-A- S54 106 836
- JP-A- 2012 151 952

## Beschreibung

Die vorliegende Erfindung betrifft ein Schaltfeld, insbesondere für die Mittelspannung, umfassend zumindest einen Sammelschienenanschluss, der über ein Schaltgerät mit Trennfunktion mit zumindest einem Kabelanschluss verbindbar ist. Das Schaltgerät mit Trennfunktion verbindet die Sammelschiene mit dem Kabelanschluss oder unterbricht diese Verbindung und kann beispielsweise einen Einschub umfassen, der mit einem Leistungsschalter ausgestattet ist und in eine Betriebsstellung ein- und ausfahrbar ist. Alternativ kann ein Einschub mit Einfahrkontakten aber auch ohne Leistungsschalter eingesetzt werden, wenn nur eine reine Trennfunktion ohne Anforderung an ein Schaltleistungsvermögen gefordert ist. Weitere Ausführungsvarianten für Schaltgeräte mit Trennfunktion sind beispielsweise reine Trennschalter oder Lasttrennschalter, die zusätzlich noch Bemessungsströme schalten können. Zum Erden des Kabelanschlusses ist in dem Schaltfeld zusätzlich ein Erdungsschalter vorgesehen, dessen Betätigung durch einen Sperrmechanismus verhindert wird, wenn sich das Schaltgerät in seiner Betriebsstellung befindet.

Derartige Schaltfelder sind aus dem Stand der Technik, z.B. aus der GB 2 121 606 A oder der WO 2014/106912 A1, bekannt. Wenn für Anschluss- oder Wartungsarbeiten der Kabelanschluss geerdet werden soll, muss zunächst das Schaltgerät in eine Außerbetriebsstellung gebracht werden. Im Falle eines Leistungsschalters wird dieser aus seiner Betriebsstellung ausgefahren, so dass sich die Anschlusskontakte des Leistungsschalters von dem Sammelschienenanschluss und dem Kabelanschluss vollständig lösen. Erst in dieser ausgefahrenen Stellung gibt der Sperrmechanismus eine Betätigung des Erdungsschalters frei, um zu verhindern, dass versehentlich ein Kurzschluss erzeugt wird, falls der Sammelschienenanschluss mit Spannung beaufschlagt sein oder werden sollte. Im Falle eines Trennschalters wird dieser in seine ausgeschaltete Stellung gebracht, d.h. der Trennschalter befindet sich dann nicht mehr in seiner Betriebsstellung.

Wenn für Anschluss- oder Wartungsarbeiten der Sammelschienenanschluss des Schaltfeldes geerdet werden soll, so ist es im Stand der Technik erforderlich, entweder hierfür ein speziell ausgebildetes, zusätzliches Schaltfeld vorzusehen oder aber auf dem vorstehend beschriebenen Schaltfeld in einem separaten Gehäuse einen zusätzlichen Erdungsschalter bereitzustellen.

Es ist die Aufgabe der vorliegenden Erfindung, ein Schaltfeld nach dem Oberbegriff des Anspruchs 1 so zu verbessern, dass ein Erden des Sammelschienenanschlusses möglich ist, ohne dass ein erhöhter Bauraum benötigt wird.

Die Lösung dieser Aufgabe erfolgt durch die Merkmale des Anspruchs 1 und insbesondere dadurch, dass in dem Schaltfeld eine Freigabeeinrichtung zum Deaktivieren des Sperrmechanismus vorgesehen ist, die eine Betätigung des Erdungsschalters auch dann ermöglicht, wenn sich das Schaltgerät in seiner Betriebsstellung befindet, und dass der Sperrmechanismus einen segmentierten Sperrschieber aufweist, der als Teil der Freigabeeinrichtung ein verschwenkbares, rotierbares oder verschiebbares Segment aufweist. Mit der erfindungsgemäßen Freigabeeinrichtung kann also der Sammelschienenanschluss über das in seiner Betriebsstellung befindliche Schaltgerät und über den Erdungsschalter des Kabelanschlusses geerdet werden, indem der Sperrmechanismus sozusagen umgangen wird. Hierbei kann durch geeignete Sicherheitsmaßnahmen gewährleistet werden, dass ein Deaktivieren des Sperrmechanismus durch die Freigabeeinrichtung nur durch autorisiertes Personal oder aber dann erfolgt, wenn eine Gefährdung anderweitig ausgeschlossen ist.

Mit dem erfindungsgemäßen Schaltfeld lässt sich ohne Verwendung eines zusätzlichen Erdungsschalters ein Sammelschienenanschluss innerhalb eines herkömmlichen Schaltfeldes mit dem ohnehin vorhandenen Erdungsschalter des Kabelanschlusses erden, ohne dass eine größere Grundfläche für ein zusätzliches Schaltfeld oder aber ein erhöhter Bauraum durch Vorsehen eines zusätzlichen extern angebauten Erdungsschalters nötig wäre. Die erfindungsgemäße Lösung lässt sich außerordentlich kostengünstig herstellen und erweitert den Funktionsumfang des Schaltfeldes.

Durch die Segmentierung des Sperrschiebers lässt sich dieser auf einfache und mechanisch zuverlässige Weise außer Kraft setzen, indem das verschwenkbare, rotierbare oder verschiebbare Segment so bewegt wird, dass es die Kraftübertragung des Sperrschiebers unterbricht.

Vorteilhafte Ausführungsformen der Erfindung sind der Beschreibung, der Zeichnung sowie den Unteransprüchen beschrieben.Nach einer ersten vorteilhaften Ausführungsform kann die Freigabeeinrichtung von außerhalb des Schaltfelds betätigbar sein. Auf diese Weise ist es nicht erforderlich, dass das Schaltfeld zum Erden des Sammelschienenanschlusses geöffnet wird, d.h. das Gehäuse des Schaltfeldes kann zum Erden des Sammelschienenanschlusses vollständig geschlossen bleiben.

Nach einer weiteren vorteilhaften Ausführungsform kann die Freigabeeinrichtung eine auf der Bedienseite des Schaltfelds angeordnete Betätigungseinrichtung aufweisen, beispielsweise einen Schlüsselzylinder, einen Drehknopf oder einen Schieber. Bei dieser Ausführungsform lässt sich auf äußerst komfortable Weise ein Deaktivieren des Sperrmechanismus erreichen, indem die auf der Bedienseite des Schaltfelds angeordnete Betätigungseinrichtung betätigt wird, um die Freigabeeinrichtung zu aktivieren. So kann beispielsweise auf der Bedienseite des Schaltfelds ein mit einem Vorhangschloss gesicherter Drehknopf vorgesehen sein, dessen Betätigung die Freigabeeinrichtung aktiviert, um den Sperrmechanismus zu deaktivieren, damit eine Betätigung des Erdungsschalters auch dann möglich ist, wenn sich das Schaltgerät in seiner Betriebsstellung befindet.

Nach einer weiteren vorteilhaften Ausführungsform kann der Sperrmechanismus den Erdungsschalter verriegeln, so dass beispielsweise eine Welle des Erdungsschalters blockiert ist. Alternativ oder zusätzlich kann der Sperrmechanismus einen Freigabeschieber verriegeln, so dass das Betätigen des Erdungsschalters ermöglicht wird. Ein solcher Freigabeschieber kann beispielsweise in Form einer Klappe oder eines Schiebers im Bereich einer Einstecköffnung für ein Betätigungswerkzeug des Erdungsschalters vorgesehen sein. Durch Verschließen der Eingabeöffnung kann demnach das Betätigungswerkzeug nicht eingesteckt werden, so dass der Erdungsschalter in diesem Fall nicht betätigt werden kann. Wenn jedoch der Freigabeschieber nicht mehr verriegelt ist, lässt sich das Betätigungswerkzeug einstecken, um den Erdungsschalter zu betätigen.

Nach einer weiteren vorteilhaften Ausführungsform kann die Freigabeeinrichtung mit einem Sicherungsmechanismus versehen sein, um eine unautorisierte Betätigung der Freigabeeinrichtung zu verhindern. Der Sicherungsmechanismus kann beispielsweise ein Schloss, insbesondere ein Bügelschloss aufweisen, dessen Schlüssel nur autorisiertem Personal zugänglich ist.

Nach einer weiteren vorteilhaften Ausführungsform kann der Sicherungsmechanismus zumindest eine Schlüsselwechseleinheit aufweisen, um sicherzustellen, dass sich alle Schaltelemente der beteiligten Schaltanlage in einer ordnungsgemäßen Position befinden, bevor die Freigabeeinrichtung deaktiviert werden kann. Derartige Schlüsselwechseleinheiten sind aus dem Stand der Technik grundsätzlich bekannt und erzwingen beispielsweise die Freigabe eines Primärschlüssels durch mehrere Sekundärschlüssel. Die Sekundärschlüssel sind dabei so vorgesehen, dass diese nur in einer bestimmten, vorgeschriebenen Schaltstellung eines Schaltelements abgezogen werden können. Hierdurch kann beispielsweise sichergestellt werden, dass der Leistungsschalter eines Einspeisefelds der Schaltanlage ausgeschaltet ist und/oder sich nicht in seiner Betriebsstellung befindet, so dass die Sammelschiene nicht mit Spannung beaufschlagt ist, wenn diese mit Hilfe der erfindungsgemäßen Freigabeeinrichtung geerdet werden soll.

Nach einer weiteren vorteilhaften Ausführungsform kann die Freigabeeinrichtung für ein erneutes Aktivieren des Sperrmechanismus rückstellbar sein, so dass insbesondere ohne Öffnung des Schaltfelds in den vorherigen Betriebsmodus übergegangen werden kann, in dem der Sperrmechanismus eine Betätigung des Erdungsschalters verhindert, wenn sich das Schaltgerät in seiner Betriebsstellung befindet.

Für eine erhöhte Sicherheit kann es nach einer weiteren Ausführungsform vorteilhaft sein, wenn eine Rückstellung der Freigabeeinrichtung nur dann ermöglicht ist, wenn sich das Schaltgerät nicht in seiner Betriebsstellung befindet und/oder wenn der Erdungsschalter geöffnet ist.

Das erfindungsgemäße Schaltgerät muss eine Trennfunktion aufweisen und kann beispielsweise ein Trenneinschub sein, der in seiner eingefahrenen Stellung, d.h. in seiner Betriebsstellung, den Kabelanschluss mit dem Sammelschienenanschluss verbindet, und der in seiner ausgefahrenen Stellung diese Verbindung trennt. Alternativ kann das Schaltgerät ein aus seiner Betriebsstellung ausfahrbarer Einschub mit einem Leistungsschalter sein, wobei die Betriebsstellung auch hier die eingefahrene Stellung des Einschubs ist.

Nach einer weiteren vorteilhaften Ausführungsform kann das Schaltgerät ein Trennschalter oder ein Lasttrennschalter sein, wobei in diesem Fall die Betriebsstellung die eingeschaltete Stellung des Trennschalters oder des Lasttrennschalters ist.

Nachfolgend wird die vorliegende Erfindung rein beispielhaft anhand vorteilhafter Ausführungsformen und unter Bezugnahme auf die beigefügten Zeichnungen beschrieben.

Es zeigen:
- Fig. 1: eine schematische Darstellung eines bekannten Schaltfeldes, wobei der Leistungsschalter des Schaltfeldes aus seiner Betriebsstellung ausgefahren ist;
- Fig. 2: das Schaltfeld von Fig. 1, wobei der Leistungsschalter in seine Betriebsstellung eingefahren ist;
- Fig. 3: eine vereinfachte schematische Darstellung des Sperrmechanismus des Schaltfeldes von Fig. 1 und 2 in einer Betriebsstellung des Leistungsschalters;
- Fig. 4: eine vereinfachte schematische Darstellung des Sperrmechanismus des Schaltfeldes von Fig. 1 und 2, wobei der Leistungsschalter aus der Betriebsstellung ausgefahren ist;
- Fig. 5: eine vereinfachte Darstellung einer erfindungsgemäßen Freigabeeinrichtung;
- Fig. 6: eine weitere Ausführungsform einer erfindungsgemäßen Freigabeeinrichtung;
- Fig. 7: eine dritte Ausführungsform einer erfindungsgemäßen Freigabeeinrichtung;
- Fig. 8: eine vierte Ausführungsform einer erfindungsgemäßen Freigabeeinrichtung;
- Fig. 9: eine fünfte Ausführungsform einer erfindungsgemäßen Freigabeeinrichtung; und
- Fig. 10: eine schematische Darstellung einer auf der Bedienseite des Schaltfelds angeordneten Betätigungseinrichtung.

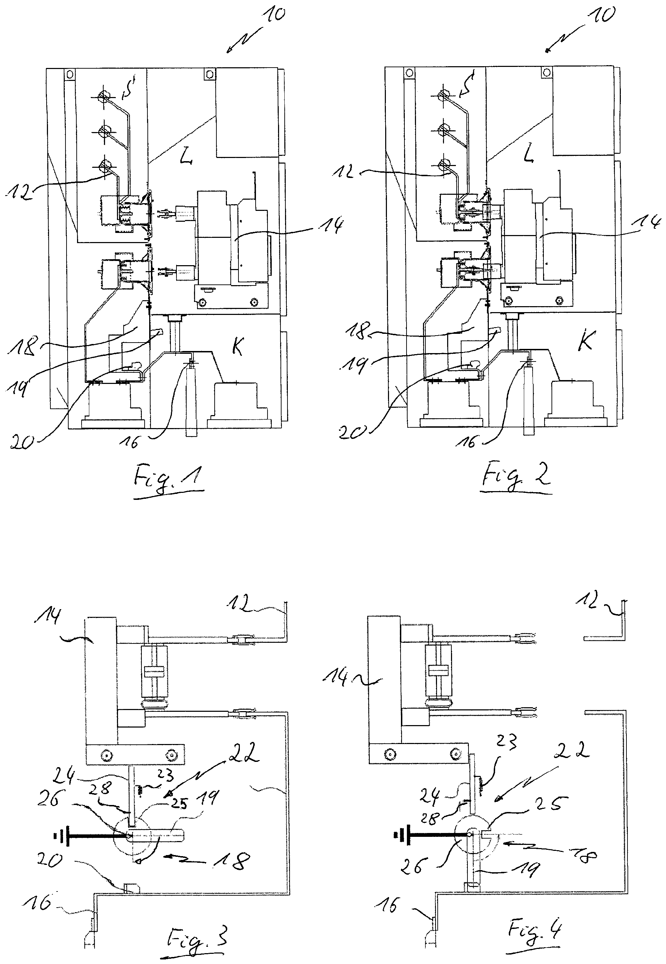

Fig. 1 und Fig. 2 zeigen schematisch ein bekanntes Schaltfeld 10, das in einem Gehäuse einen Sammelschienenraum S, einen Leistungsschalterraum L und einen Kabelanschlussraum K aufweist. In dem Sammelschienenraum S ist zumindest ein Sammelschienenanschluss 12 vorgesehen, der bei dem dargestellten Ausführungsbeispiel über ein Schaltgerät mit Trennfunktion in Form eines Leistungsschalters 14 mit zumindest einem Kabelanschluss 16 verbindbar ist, welcher in dem Kabelanschlussraum K vorgesehen ist. Um eine Verbindung zwischen dem Sammelschienenanschluss 12 und dem Kabelanschluss 16 vollständig zu unterbrechen und ein versehentliches Schalten des Leistungsschalters 14 vollständig auszuschließen, ist der Leistungsschalter 14 aus seiner in Fig. 2 dargestellten Betriebsstellung, in der die Kontakte des Leistungsschalters 14 in ihre zugehörigen Buchsen eingefahren sind, aus dieser Betriebsstellung ausfahrbar, was in Fig. 1 dargestellt ist. In dieser aus der Betriebsstellung ausgefahrenen Position, die üblicherweise durch Betätigen einer Kurbel erreicht wird, sind die Steckkontakte des Leistungsschalters 14 aus den zugehörigen Buchsen vollständig ausgefahren.

Zum Erden des Kabelanschlusses 16 ist bei dem in den Fig. 1 und Fig. 2 dargestellten Schaltfeld ein nur schematisch angedeuteter Erdungsschalter 18 vorgesehen, der in Fig. 1 und Fig. 2 in seiner offenen Position dargestellt ist, in der ein Schaltmesser 19 des Erdungsschalters 18 keinen Kontakt mit einem Erdungskontakt 20 des Kabelanschlusses 16 herstellt. Wird jedoch das Schaltmesser 19 in den Fig. 1 und Fig. 2 im Uhrzeigersinn gedreht, so wird der Kabelanschluss 16 über den Kontakt 20 und das Schaltmesser 19 mit Erde verbunden.

Um zu verhindern, dass der Erdungsschalter 18 versehentlich betätigt wird, obwohl die Sammelschiene 12 unter Umständen noch mit Spannung beaufschlagt ist, weist das in den Fig. 1 und 2 dargestellte Schaltfeld einen Sperrmechanismus 22 auf, der eine Betätigung des Erdungsschalters 20 verhindert, wenn sich der Leistungsschalter 14 in seiner in den Fig. 2 und Fig. 3 dargestellten Betriebsstellung befindet. Hierzu weist der Sperrmechanismus 22 bei dem dargestellten Beispiel einen über eine Zugfeder 23 vorgespannten Sperrschieber 24 auf, der mit seinem unteren Ende in eine Aussparung 25 einer Welle 26 des Erdungsschalters 18 eingreift, wenn sich der Erdungsschalter 18 in dem in Fig. 3 dargestellten geöffneten Zustand befindet und wenn der Leistungsschalter 14 in seine in Fig. 3 dargestellte Betriebsstellung eingefahren ist. Für ein Betätigen des Erdungsschalters 18 müsste das Schaltmesser 19, wie in Fig. 3 dargestellt, im Uhrzeigersinn um 90° verschwenkt werden, was jedoch durch den Sperrmechanismus 22 verhindert ist.

Fig. 4 zeigt die Anordnung von Fig. 3, wobei jedoch der Leistungsschalter 14 aus seiner Betriebsstellung ausgefahren ist, so dass die Steckkontakte des Leistungsschalters 14 galvanisch von dem Sammelschienenanschluss 12 und dem Kabelanschluss 16 getrennt sind. In dieser ausgefahrenen Position des Leistungsschalters 14 ist der Sperrschieber 24 freigegeben, so dass dieser gegen die Kraft der Zugfeder 23 nach oben gedrückt werden kann, wodurch der Sperrschieber 24 aus der Aussparung 25 herausbewegt wird, so dass eine Drehung der Welle 26 des Erdungsschalters möglich ist und dieser geschlossen werden kann, was in Fig. 4 dargestellt ist. In diesem Zustand ist der Kabelanschluss 16 geerdet, um Anschluss- oder Wartungsarbeiten durchzuführen. Sobald der Sperrschieber 24 nach oben gedrückt ist, wird das Einfahren des Leistungsschalters in die Betriebsstellung verhindert. Nach dem Drehen der Welle 26 des Erdungsschalters kann der Sperrschieber nicht mehr nach unten bewegt werden und sperrt automatisch das Einfahren des Leistungsschalters. Nach Abschluss dieser Arbeiten wird der Erdungsschalter 18 wieder geöffnet (Fig. 3) und der Sperrschieber 24 wird durch die Zugfeder 23 nach unten gedrückt, so dass einerseits der Erdungsschalter 18 gesperrt ist und andererseits der Leistungsschalter 14 wieder in seine Betriebsstellung eingefahren werden kann.

Das erfindungsgemäße Schaltfeld ist in gleicher Weise aufgebaut wie das vorstehend im Zusammenhang mit den Fig. 1 bis Fig. 4 beschriebene Schaltfeld, wobei jedoch zusätzlich eine Freigabeeinrichtung vorgesehen ist, mit welcher der Sperrmechanismus 22 deaktiviert werden kann, um eine Betätigung des Erdungsschalters 18 auch dann zu ermöglichen, wenn sich der Leistungsschalter 14 in seiner in den Fig. 2 und Fig. 3 dargestellten Betriebsstellung befindet.

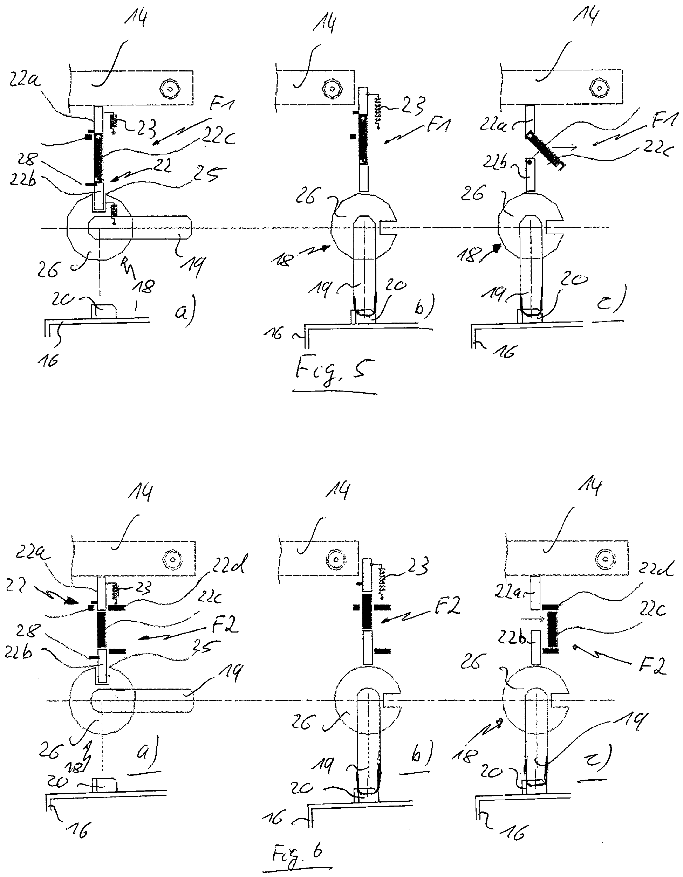

Fig. 5 zeigt eine erste Ausführungsform einer Freigabeeinrichtung F1, mit welcher der Sperrschieber des Sperrmechanismus deaktiviert werden kann. Hierzu ist bei dieser Ausführungsform der Sperrschieber segmentiert ausgebildet und weist ein oberes Segment 22a und ein unteres Segment 22b auf, die über ein verschwenkbares Segment 22c miteinander koppelbar sind, das einen Teil der Freigabeeinrichtung F1 darstellt. Hierbei ist in der in Fig. 5a gezeigten Position das Segment 22c in eine (vertikale) Stellung verschwenkt, in der eine Kraftübertragung durch die Segmente 22a und 22b ermöglicht wird, so dass der Sperrmechanismus seine gewünschte Funktion erfüllt, bei der der Erdungsschalter 18 gesperrt ist, wenn sich der Leistungsschalter 14 in seiner Betriebsstellung befindet und bei welcher der Erdungsschalter 18 betätigbar ist, wenn der Leistungsschalter 14 aus seiner Betriebsstellung ausgefahren ist.

Durch Betätigen der Freigabeeinrichtung F1 (von außerhalb des Schaltfelds) kann das schwenkbare Segment 22c in die in Fig. 5c dargestellte Position verschwenkt werden, wodurch eine Kopplung zwischen den Segmenten 22a und 22b aufgehoben ist. In diesem Fall kann durch eine nicht näher dargestellte Feder oder ein nicht näher dargestelltes Betätigungselement das untere Segment 22b des Sperrschiebers nach oben bewegt werden, so dass die Welle 26 des Erdungsschalters 18 nicht mehr blockiert ist und der Erdungsschalter 18 in die geschlossene Stellung gebracht werden kann, obwohl sich der Leistungsschalter 14 in seiner Betriebsstellung befindet.

Fig. 6a bis 6c zeigen eine zweite Ausführungsform einer Freigabeeinrichtung F2, die ähnlich wie die Freigabeeinrichtung F1 der Fig. 5 aufgebaut ist, wobei jedoch das Segment 22c nicht verschwenkbar sondern verschiebbar ausgebildet ist. In der in den Fig. 6a und Fig. 6b dargestellten Positionen überträgt das verschiebbare Segment 22c Kraft zwischen den Segmenten 22a und 22b. Durch Betätigen der Freigabeeinrichtung F2 kann jedoch das Segment 22c innerhalb einer Führung 22d verschoben werden, so dass die Kraftübertragung nicht mehr vorhanden ist und das untere Segment 22b durch eine Feder oder eine Stellvorrichtung nach oben bewegt werden kann, um den Sperrmechanismus 22 zu deaktivieren und eine Betätigung des Erdungsschalters 18 zu ermöglichen.

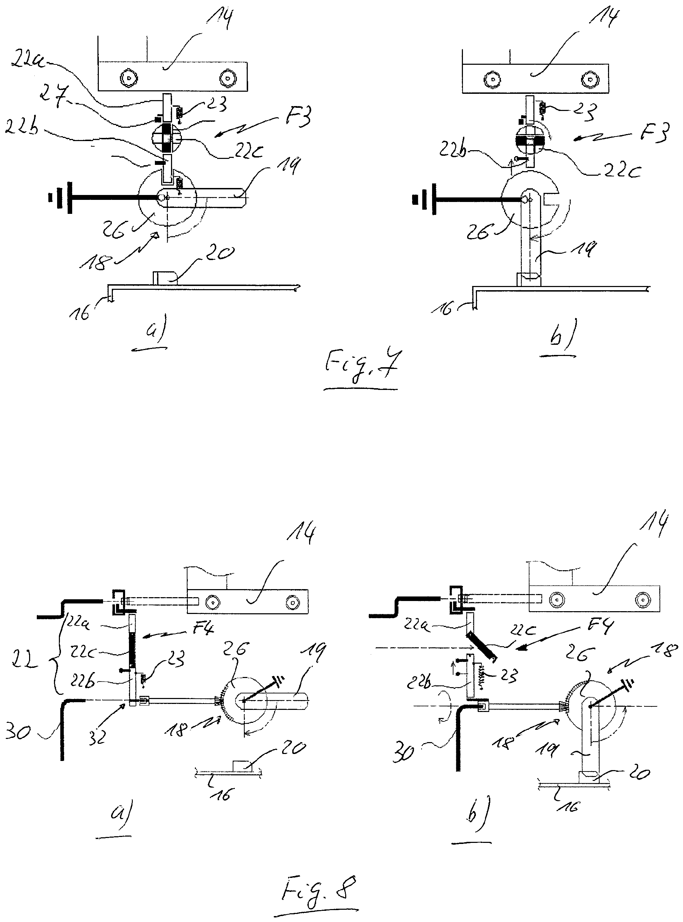

Fig. 7a und Fig. 7b zeigen eine dritte Ausführungsform einer Freigabeeinrichtung F3, die ähnlich aufgebaut ist wie die Freigabeeinrichtungen F1 und F2, wobei jedoch das mittlere Segment 22 um eine Mittelachse rotierbar ausgebildet ist, so dass es von einer Koppelstellung (Fig. 7a) in eine Freigabestellung (Fig. 7b) um 90° verschwenkt werden kann, um eine Deaktivierung des Sperrmechanismus 22 zu ermöglichen. Das Bezugszeichen 27 in Fig. 7a bezeichnet dabei einen Anschlag für das obere Segment 22a.

Fig. 8 zeigt eine vierte Ausführungsform einer Freigabeeinrichtung F4, die ähnlich aufgebaut ist wie die Freigabeeinrichtung F1 der Fig. 5a bis Fig. 5c. Jedoch ist bei dieser Ausführungsform der Sperrmechanismus 22 so ausgebildet, dass er eine Betätigung des Erdungsschalters 18 verhindert, indem eine Einstecköffnung für eine Betätigungskurbel 30 verschlossen wird. Bei dieser Ausführungsform ist eine Einstecköffnung für eine Betätigungskurbel 30 zum Schließen des Erdungsschalters 18 durch einen Freigabeschieber 32 verschließbar, der einen Teil des unteren Segments 22b des Sperrschiebers bildet, der wiederum aus den Segmenten 22a bis 22c zusammengesetzt ist. In der in Fig. 8a dargestellten Position befindet sich der Leistungsschalter 14 in seiner Betriebsstellung, wodurch der Sperrmechanismus 22 die Einstecköffnung für die Betätigungskurbel 30 verschließt, so dass der Erdungsschalter 18 nicht geschlossen werden kann. Durch Betätigen der Freigabeeinrichtung F4, d.h. durch Verschwenken des mittleren Segments 22c entgegen dem Uhrzeigersinn wird der Sperrmechanismus 22 deaktiviert und das untere Segment 22b kann nach oben geschoben werden, so dass sich der damit verbundene Freigabeschieber 32 ebenfalls nach oben bewegt und dadurch die Einstecköffnung für die Betätigungskurbel 30 des Erdungsschalters 18 freigibt. Auf diese Weise ist es nun möglich, die Betätigungskurbel 30 einzustecken und dadurch den Erdungsschalter 18 zu schließen und in die in Fig. 8b dargestellte Position zu bringen.

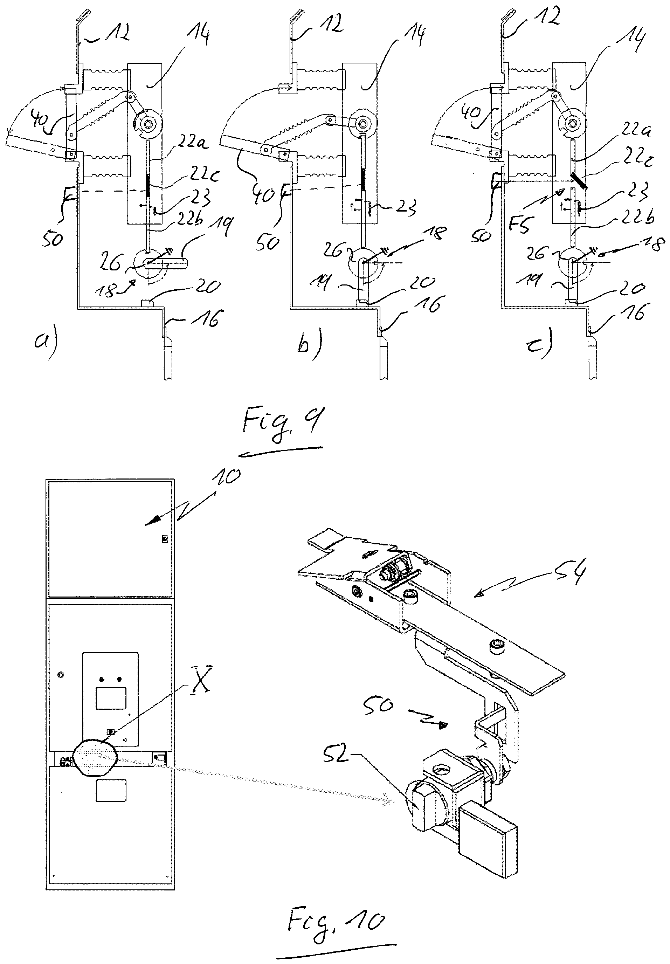

Fig. 9 zeigt eine weitere Ausführungsform eines Schaltfelds mit einem Schaltgerät 14 mit Trennfunktion in Form eines Trennschalters. Der Trennschalter ist von der Bedienseite des Schaltfelds über einen Schwenkhebel 40 bedienbar und befindet sich in seiner in Fig. 9a) gezeigten Stellung in seiner Betriebsstellung, in der eine elektrische Verbindung zwischen dem Sammelschienenanschluss 12 und dem Kabelanschluss 16 hergestellt ist. Auch hier ist ein segmentierter Sperrschieber vorgesehen, der die Welle 26 des Erdungsschalters 18 blockiert, so dass der Erdungsschalter 18 nicht betätigt werden kann, wenn sich der Trennschalter in der in Fig. 9a) dargestellten Betriebsstellung befindet.

Durch Verschwenken des Schwenkhebels 40 öffnet der Trennschalter 14, so dass der Sperrschieber mit seinem oberen Segment 22a in eine Vertiefung in der Welle des Trennschalters 14 eingreifen kann, so dass die Welle 26 des Erdungsschalters 18 freigegeben wird und dieser zum Erden des Kabelanschlusses 16 geschlossen werden kann. Gleichzeitig wird in dieser Position ein Betätigen des Schwenkhebels 40 verhindert.

Ähnlich wie bei der Ausführungsform der Fig. 5 weist auch diese Ausführungsform eine Freigabeeinrichtung F5 auf, mit welcher der Sperrschieber des Sperrmechanismus deaktiviert werden kann. Hierzu ist auch bei dieser Ausführungsform der Sperrschieber segmentiert ausgebildet und weist ein oberes Segment 22a und ein unteres Segment 22b auf, die über ein verschwenkbares Segment 22c miteinander koppelbar sind, das einen Teil der Freigabeeinrichtung F5 darstellt. Hierbei ist in der in Fig. 9a und 9b gezeigten Position das Segment 22c in eine (vertikale) Stellung verschwenkt, in der eine Kraftübertragung durch die Segmente 22a und 22b ermöglicht wird, so dass der Sperrmechanismus seine gewünschte Funktion erfüllt, bei der der Erdungsschalter 18 gesperrt ist, wenn sich der Trennschalter 14 in seiner Betriebsstellung befindet und bei welcher der Erdungsschalter 18 betätigbar ist, wenn der Trennschalter 14 geöffnet ist (Fig. 9b).

Die Freigabeeinrichtung F5 kann von der Bedienseite des Schaltfelds aus mit Hilfe einer Betätigungseinrichtung 50 betätigt werden, mit welcher das schwenkbare Segment 22c in die in Fig. 9c dargestellte Position verschwenkt werden kann, wodurch eine Kopplung zwischen den Segmenten 22a und 22b aufgehoben ist. In diesem Fall kann durch eine nicht näher dargestellte Feder oder ein nicht näher dargestelltes Betätigungselement das untere Segment 22b des Sperrschiebers nach oben bewegt werden, so dass die Welle 26 des Erdungsschalters 18 nicht mehr blockiert ist und der Erdungsschalter 18 in die geschlossene Stellung gebracht werden kann, obwohl sich der Trennschalter 14 in seiner Betriebsstellung befindet.

Fig. 10 zeigt im linken Teil das vorstehend beschriebene Schaltfeld 10, wobei mit dem Bezugszeichen X ein Bereich markiert ist, in dem sich die Betätigungseinrichtung 50 auf der Bedienseite des Schaltfelds befinden kann. Bei dem dargestellten Ausführungsbeispiel umfasst die Betätigungseinrichtung 50 einen Drehknopf 52, der über ein Vorhangschloss sicherbar ist und mit dem die Freigabeeinrichtung F5 über eine Hebelmechanik 54 betätigt werden kann. Es versteht sich, dass die dargestellte Ausführungsform der Betätigungseinrichtung 50 nur beispielhaft ist und auf ähnliche Weise durch einen Schlüsselzylinder, einen Schieber oder andere Betätigungselemente gebildet werden kann.

## Patentansprüche

1. Schaltfeld (10), insbesondere für Mittelspannung, umfassend zumindest einen Sammelschienenanschluss (12), der über ein Schaltgerät (14) mit Trennfunktion mit zumindest einem Kabelanschluss (16) verbindbar ist, wobei zum Erden des Kabelanschlusses (16) in dem Schaltfeld (10) ein Erdungsschalter (18) vorgesehen ist, dessen Betätigung durch einen Sperrmechanismus (22) verhindert wird, wenn sich das Schaltgerät (14) in seiner Betriebsstellung befindet,
**dadurch gekennzeichnet, dass** eine Freigabeeinrichtung (F1-F5) zum Deaktivieren des Sperrmechanismus (22) vorgesehen ist, die eine Betätigung des Erdungsschalters (18) auch dann ermöglicht, wenn sich das Schaltgerät (14) in seiner Betriebsstellung befindet, und
der Sperrmechanismus (22) einen segmentierten Sperrschieber (22, 22a, 22b) aufweist, der als Teil der Freigabeeinrichtung (F1-F5) ein verschwenkbares, rotierbares oder verschiebbares Segment (22c) aufweist.

2. Schaltfeld nach Anspruch 1,
**dadurch gekennzeichnet, dass** die Freigabeeinrichtung (F1-F5) von außerhalb des Schaltfelds (10) betätigbar ist.

3. Schaltfeld nach Anspruch 2,
**dadurch gekennzeichnet, dass** die Freigabeeinrichtung (F1-F5) eine auf der Bedienseite des Schaltfelds angeordnete Betätigungseinrichtung (50) aufweist.

4. Schaltfeld nach Anspruch 3 ,
**dadurch gekennzeichnet, dass** die Betätigungseinrichtung (50) ein Schlüsselzylinder, ein Drehknopf oder ein Schieber ist.

5. Schaltfeld nach zumindest einem der vorstehenden Ansprüche,
**dadurch gekennzeichnet, dass** der Sperrmechanismus (22) den Erdungsschalter (18) verriegelt.

6. Schaltfeld nach zumindest einem der vorstehenden Ansprüche,
**dadurch gekennzeichnet, dass** der Sperrmechanismus (22) einen Freigabeschieber (32) zum Betätigen des Erdungsschalters (18) verriegelt.

7. Schaltfeld nach zumindest einem der vorstehenden Ansprüche,
**dadurch gekennzeichnet, dass** die Freigabeeinrichtung (F1-F5) mit einem Sicherungsmechanismus versehen ist.

8. Schaltfeld nach Anspruch 7,
**dadurch gekennzeichnet, dass** der Sicherungsmechanismus zumindest ein Schloss aufweist.

9. Schaltfeld nach zumindest einem der vorstehenden Ansprüche 7 oder 8,
**dadurch gekennzeichnet, dass** der Sicherungsmechanismus zumindest eine Schlüsselwechseleinheit aufweist.

10. Schaltfeld nach zumindest einem der vorstehenden Ansprüche,
**dadurch gekennzeichnet, dass** die Freigabeeinrichtung (F1-F5) für ein erneutes Aktivieren des Sperrmechanismus rückstellbar ist.

11. Schaltfeld nach Anspruch 10,
**dadurch gekennzeichnet, dass** eine Rückstellung der Freigabeeinrichtung (F1-F5) nur dann ermöglicht ist, wenn sich das Schaltgerät (14) nicht in seiner Betriebsstellung befindet, und/oder wenn der Erdungsschalter (18) geöffnet ist.

12. Schaltfeld nach zumindest einem der vorstehenden Ansprüche,
**dadurch gekennzeichnet, dass** das Schaltgerät (14) ein aus einer Betriebsstellung ausfahrbarer Einschub, insbesondere ein Einschub mit einem Leistungsschalter, ist, und dass die Betriebsstellung die eingefahrene Stellung des Einschubs ist.

13. Schaltfeld nach zumindest einem der vorstehenden Ansprüche 1 - 12,
**dadurch gekennzeichnet, dass** das Schaltgerät (14) ein Trennschalter oder ein Lasttrennschalter ist, und dass die Betriebsstellung die eingeschaltete Stellung des Trenn- oder Lasttrennschalters ist.

## Claims

1. A switch panel (10), in particular for a medium voltage, comprising at least one busbar terminal (12) which is connectable to at least one cable connector (16) via a switchgear (14) having a disconnecting function, wherein a grounding switch (18) is provided in the switch panel (10) for grounding the cable connector (16) and its actuation is prevented by a blocking mechanism (22) when the switchgear (14) is in its operating position,
**characterized in that**
a release device (F1-F5) is provided for deactivating the blocking mechanism (22) and also enables an actuation of the grounding switch (18) when the switchgear (14) is in its operating position; and
the blocking mechanism (22) has a segmented blocking slider (22, 22a, 22b) which as part of the release device (F1-F5) has a pivotable, rotatable or displaceable segment (22c).

2. A switch panel in accordance with claim 1,
**characterized in that**
the release device (F1-F5) can be actuated from outside the switch panel (10).

3. A switch panel in accordance with claim 2,
**characterized in that**
the release device (F1-F5) has an actuation device (50) arranged at the operating side of the switch panel.

4. A switch panel in accordance with claim 3,
**characterized in that**
the actuation device (50) is a key cylinder, a rotary knob or a slider.

5. A switch panel in accordance with at least one of the preceding claims,
**characterized in that**
the blocking mechanism (22) locks the grounding switch (18).

6. A switch panel in accordance with at least one of the preceding claims,
**characterized in that**
the blocking mechanism (22) locks a release slider (32) for actuating the grounding switch (18).

7. A switch panel in accordance with at least one of the preceding claims,
**characterized in that**
the release device (F1-F5) is provided with a securing mechanism.

8. A switch panel in accordance with claim 7,
**characterized in that**
the securing mechanism has at least one lock.

9. A switch panel in accordance with at least one of the preceding claims 7 or 8,
**characterized in that**
the securing mechanism has at least one key exchange unit.

10. A switch panel in accordance with at least one of the preceding claims,
**characterized in that**
the release device (F1-F5) can be reset for a further activation of the blocking mechanism.

11. A switch panel in accordance with claim 10,
**characterized in that**
a reset of the release device (F1-F5) is only made possible when the switchgear (14) is not in its operating position and/or when the grounding switch (18) is open.

12. A switch panel in accordance with at least one of the preceding claims,
**characterized in that**
the switchgear (14) is a drawer which can be moved out of an operating position, in particular a drawer having a circuit breaker; and **in that** the operating position is the moved-in position of the drawer.

13. A switch panel in accordance with at least one of the preceding claims 1 to 12,
**characterized in that**
the switchgear (14) is a disconnect switch or a load disconnect switch; and **in that** the operating position is the switched-on position of the disconnect switch or load disconnect switch.

## Revendications

1. Tableau de commande (10), en particulier pour moyenne tension, comprenant au moins un raccordement de barre collectrice (12) qui peut être relié à au moins un raccordement de câble (16) par l'intermédiaire d'un dispositif de commutation (14) avec fonction de séparation, un sectionneur de terre (18) étant prévu dans le tableau de commande (10) pour mettre à la terre le raccordement de câble (16), dont l'actionnement est empêché par un mécanisme de blocage (22) lorsque le dispositif de commutation (14) se trouve dans sa position de fonctionnement,
**caractérisé en ce**
**qu'**un moyen de libération (F1-F5) est prévu pour désactiver le mécanisme de blocage (22), qui permet un actionnement du sectionneur de terre (18) même lorsque le dispositif de commutation (14) se trouve dans sa position de fonctionnement, et
le mécanisme de blocage (22) présente un coulisseau de verrouillage segmenté (22, 22a, 22b) qui présente un segment pivotant, rotatif ou coulissant (22c) en tant que partie du moyen de libération (F1-F5).

2. Tableau de commande selon la revendication 1,
**caractérisé en ce**
**que** le moyen de validation (F1-F5) peut être actionné de l'extérieur du tableau de commande (10).

3. Tableau de commande selon la revendication 2,
**caractérisé en ce**
**que** le moyen de libération (F1-F5) présente un moyen d'actionnement (50) disposé du côté opérateur du tableau de commande.

4. Tableau de commande selon la revendication 3,
**caractérisé en ce**
**que** le moyen d'actionnement (50) est un cylindre de clé, un bouton rotatif ou un coulisseau.

5. Tableau de commande selon au moins l'une des revendications précédentes,
**caractérisé en ce**
**que** le mécanisme de blocage (22) verrouille le sectionneur de terre (18).

6. Tableau de commande selon au moins l'une des revendications précédentes,
**caractérisé en ce**
**que** le mécanisme de blocage (22) verrouille un coulisseau de libération (32) pour actionner le sectionneur de terre (18).

7. Tableau de commande selon au moins l'une des revendications précédentes,
**caractérisé en ce**
**que** le moyen de libération (F1-F5) est muni d'un mécanisme de sécurité.

8. Tableau de commande selon la revendication 7,
**caractérisé en ce**
**que** le mécanisme de sécurité présente au moins un verrou.

9. Tableau de commande selon au moins l'une des revendications 7 ou 8 précédentes,
**caractérisé en ce**
**que** le mécanisme de sécurité présente au moins une unité de changement de clé.

10. Tableau de commande selon au moins l'une des revendications précédentes,
**caractérisé en ce**
**que** le moyen de libération (F1-F5) peut être réinitialisé pour une nouvelle activation du mécanisme de blocage.

11. Tableau de commande selon la revendication 10,
**caractérisé en ce**
**que** le moyen de libération (F1-F5) ne peut être réinitialisé que lorsque le dispositif de commutation (14) ne se trouve pas dans sa position de fonctionnement et/ou lorsque le sectionneur de terre (18) est ouvert.

12. Tableau de commande selon au moins l'une des revendications précédentes,
**caractérisé en ce**
**que** le dispositif de commutation (14) est un tiroir qui peut être sorti d'une position de fonctionnement, en particulier un tiroir avec un disjoncteur, et que la position de fonctionnement est la position rentrée du tiroir.

13. Tableau de commande selon au moins l'une des revendications 1 à 12 précédentes,
**caractérisé en ce**
**que** le dispositif de commutation (14) est un sectionneur ou un interrupteursectionneur, et que la position de fonctionnement est la position enclenchée du sectionneur ou de l'interrupteur-sectionneur.
